Europäisches Patentamt

European Patent Office

Office européen des brevets

(19)

(11) **EP 1 401 181 A1**

(12) **EUROPEAN PATENT APPLICATION**

(43) Date of publication:
24.03.2004 Bulletin 2004/13

(51) Int Cl.7: **H04M 3/51**, G06F 17/60

(21) Application number: 03021127.0

(22) Date of filing: 22.09.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **20.09.2002 US 251095**

(71) Applicant: **Genesys Telecommunications
Laboratories, Inc.
Daly City, CA 94014 (US)**

(72) Inventor: **Federov, Sergey
Daly City, California (US)**

(74) Representative:
**Dreiss, Fuhlendorf, Steimle & Becker
Patentanwälte
Postfach 10 37 62
70032 Stuttgart (DE)**

(54) **Method and apparatus for integrating data aggregation of historical data and real-time deliverable metrics in a database reporting environment**

(57)    A data aggregation and reporting system for integrating aspects of real-time metrics content and historical database reporting has a system framework including at least a framework core, a reporting layer, a business translation layer, and a metrics engine, a real-time client application for synchronizing propagation of the real-time metrics, and a reporting database for storing historical data and serving data upon request. The system is characterized in that the system integrates historical data return with deliverable real-time metrics through synthesizing relationships in an object oriented fashion between entities involved in an interaction chain of transactions.

*Fig. 2*

**Description**

**Field of the Invention**

The present invention is in the field of object-oriented database reporting systems, especially those integrated with communication interaction management systems such as in communications center environments, and pertains more particularly to methods and apparatus for integrating real-time metrics calculations and historical data aggregation in database reporting for interaction management.

**Background of the Invention**

In the field of interaction management and reporting as associated with communications environments, it is important to be able to track interaction progress and history related to interactions between participants or parties to communication. Interaction management software applications adhere to a primary goal of proper and efficient interaction or event delivery within a centralized or distributed communication environment. Other goals of interaction management are associated with various aspects of communication, such as quality and response time of service, maintaining independence of operating platforms and applications in communication, and keeping accurate history records of interaction progress and resolution.

State-of-the-art communication center technologies known to the inventor take the level of computer/telephony integration (CTI) to a further level wherein CTI principles of call management are implemented to manage a variety of other media types that are supported in more recent multimedia-capable communication centers. Complex and intelligent routing routines often rely on abstract or derived data that may be sourced from history-based data aggregation and reporting mechanisms. Data used for improving service in such state-of-art centers include probability-based statistics, value-based statistics, center-performance statistics and product-based statistics.

Much automation is available within state-of-art communications centers for the purpose of delivering and managing interactions in such a way as to improve client satisfaction in service as well as to reduce communication center costs associated with doing business in general. Interaction management software attempts to address many typical communication-center issues by providing tools for the purpose.

One important aspect in interaction management is the availability of historical data related to clients of the center and products of the center. For example, client historical data may include identification and contact history, account history, service history, and so on. Having access to data of this type at the start of an interaction enables better service of the client. Product history can also be associated with a client. Historical data is also available of service performance aspects of a communication center. Examples include average time of interaction handling statistics from event intercept to event resolution, average load-balancing statistics, agent performance and skill demonstration statistics, and so on.

During peak communication hours interactions within a communication center often occur very rapidly. Collectively they place a challenging demand on data stores used in routing and interaction management. Automated routing routines that route events based on availability, skill level, statistical-based routines, and others require database access and reporting routines to be performed swiftly for successful implementation and operation.

One method that is known to the inventors for increasing efficiency within a communication center is by providing automated reporting mechanisms that are object-based. In this type of environment, objects that are associated with one another and that can interact with one another represent principle pre-defined entities of the service environment in terms of a service model. These objects are represented by interaction management software at the front end of an object-oriented system and described in detail using relational database software at the back end of the system. The interactive objects are, in many cases, executable, and upon execution may instantiate other required objects for further processing in interaction management. Objects may be used to represent virtually any entity that is an integrated part of the communication center system such as switches, routers, agents, groups of agents, servers, pricing models, product descriptive models, and so on.

One issue that represents a challenge for many state-of-the-art systems is clearly defining all of the objects, their attributes and the rules in place for operating within the object realm. In very complex systems there may be many more single attributes that are associated with a cardinal object than is practical for real-time reporting under large communication-center loads. Often attributes are mapped in a database in tuple-dependant fashion requiring several or more lookups in order to obtain all of the required information to manipulate a given object in terms of relating an object to another object defining an interaction. Some interactions are more complex, may not exactly fit a given model, and more difficult to define in terms of expected attributes or parameters such as post-sale interactions, technical service interactions, and conference interactions of more than two parties. As a result, complex relational reporting systems can bog down and experience delays that add to service degradation in interaction management.

What is clearly needed is an object-oriented reporting system that enables users to resolve complex relationships between multiple dependant database entries more efficiently by striving for a one-to-one association lookup in real time between a cardinal parameter of an interaction and an observed parameter of the transaction.

**Summary of the Invention**

In a preferred embodiment of the present invention a data aggregation and reporting system for integrating aspects of real-time metrics content and historical database reporting is provided, comprising a system framework including at least a framework core, a reporting layer, a business translation layer, and a metrics engine, a real-time client application for synchronizing propagation of the real-time metrics, and a reporting database for storing historical data and serving data upon request. The system is characterized in that the system integrates historical data return with deliverable real-time metrics through synthesizing relationships in an object oriented fashion between entities involved in an interaction chain of transactions.

In a preferred embodiment data of both a real time nature and of a historical nature is collected and aggregated during relationship synthesis. Also in a preferred embodiment entity-to-entity data modeling is used to synthesize relationships. The relationships may include primary associations and derived associations, the derived associations held to a minimum through a minimum sufficiency in reporting principle.

In some embodiments real-time metrics are calculated from one or more derived associations, and may change the direction of a transaction chain associated with an interaction handling. In some cases a DN-Party-Call data model is utilized as a generic data model. Further, manageable objects may be synthesized in real time by the real-time metrics engine through building of derived associations. Still further, the framework may include an intermediate storage system functioning as a pipeline between the framework and the reporting database.

In some cases real-time metrics are used to synthesize and update manageable objects used as system entities. Also in some cases associations for one relationship are part of an evolving association chain. Further, entities may delegate further activity to one or more other entities in an association chain. The system may be used managing interactions in a communication-center.

In another aspect of the invention, in a data aggregation and reporting system, a method for building object-interaction relationships between entities managed as objects within the system is provided, comprising steps of (a) initiating a relationship beginning; (b) obtaining primary associations of the relationship; (c) collecting real-time and historical data about the relationship as it progresses; (d) building derived associations in real time; and (e) using the associations to provide a complete relationship model.

In a preferred embodiment of the method the system provides interaction management in a communication center. Also in a preferred embodiment. in step (a) initiation of a relationship beginning is event driven, and a time stamp may be applied at relationship initialization. Still in a preferred embodiment, in step (b), the primary associations are pre-defined by the framework of the system. Further still, in step (c), data collection may be extended from a reporting database of the system to the framework of the system.

In some embodiments, in step (c), real-time metrics are calculated from the real-time data. Also in some embodiments, in step (d), the derived associations are included with the primary associations in a link-state association chain. Still in some embodiments in step (e), the relationship completely defines the state of the interaction and parties to the interaction. Further still, in step (e), entity-to-entity data modeling may be used to synthesize relationships.

**Brief Description of the Drawing Figures**

Fig. 1 is a block diagram illustrating a simple billing record managed according to prior art.
Fig. 2 is a block diagram illustrating the billing record of Fig, 1 managed according to an embodiment of the invention.
Fig. 3 is a block diagram illustrating direct and derived entity-to-entity relationship structure.
Fig. 4 is a block diagram illustrating a preponderance of direct to derived relationships according to a preferred embodiment of the invention.
Fig. 5 is a block diagram illustrating a single association followed by dynamically generated associations.
Fig. 6 is a block diagram illustrating a less complex association relationship than illustrated in Fig. 5.
Fig. 7 is a block diagram illustrating interaction flow of a managed interaction according to an embodiment of the present invention.
Fig. 8 is a block diagram illustrating an enhanced version of the diagram of Fig. 7.
Fig. 9 is an entity to relationship diagram illustrating two different methods for interaction management according to an embodiment of the present invention.
Fig. 10 is a block diagram illustrating the architecture of interaction management and reporting system according to an embodiment of the invention.

## Description of the Preferred Embodiments

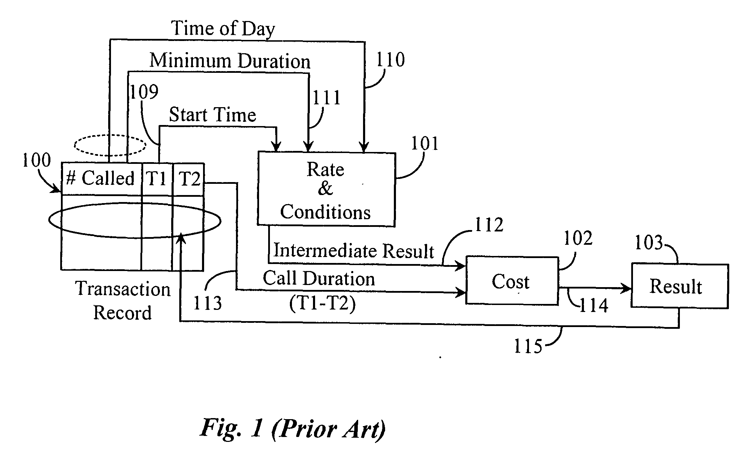

Fig. 1 is a block diagram illustrating a simple transaction record 100 managed during interaction according to prior art. Most simple communication-center interactions regardless of media type can be represented by a transaction record like record 100. Record 100 is grossly simplified in this example for the purpose of clear explanation of the invention. Record 100 contains a number identification (# called). Record 100 also contains a starting time (T1) of the interaction or transaction and a disposal time (T2) of the transaction. Disposal time T2 represents the point of call termination. It is important to note herein however that T2 may be extended through event transfers, call redirections and so on. In this simple prior art example, the parameter that must be reported according to center rules is the average cost of the transaction represented in record 100.

In order to provide the required information, the transaction parameters must be supplied to a relational database if we are using an object-oriented interaction management system. A first data tuple accessed from a database is represented by block 101 that has available historical data pertaining to rates and conditions. The time of day that the transaction occurred is written to the database. A constraint variable minimum duration 111 is provided either as an existing data snippet in the block rates and conditions 101 for that particular country identified by the # called, or it is provided as a constraint associated with the transaction itself. While the transaction is still in progress, the transaction duration cannot be provided because it is not yet a known parameter.

The first database lookup quantifies the appropriate rates and conditions matching them to the instant data known so far about the transaction. An intermediate result (based on the limited information known) is output from block 101 into a cost processor 102, which may or may not be an integral part of the database. At this time, processor 102 must wait until the transaction T2 occurs at which time the call duration (T1-T2) is delivered as call duration 113. Processor 102 may then figure the accurate cost for the transaction and formulate a real result 103 through processing activity 114, which may include additional data lookups. Result 103 is then reported through reporting activity 115 back to the transaction record 100 as a requested data return of a calculated result.

This prior-art example, although very simple in illustration, uses at least 2 dependant levels in the database. Moreover, the cost result of each transaction can be returned only after the transaction has been resolved. Therefore, if it is desired to know the cost result for example, of all transactions that occurred in a given shift, the final result can be obtained only after the particular shift under cost analysis has ended. If there were cost overruns then resolution measures can only begin at the next shift.

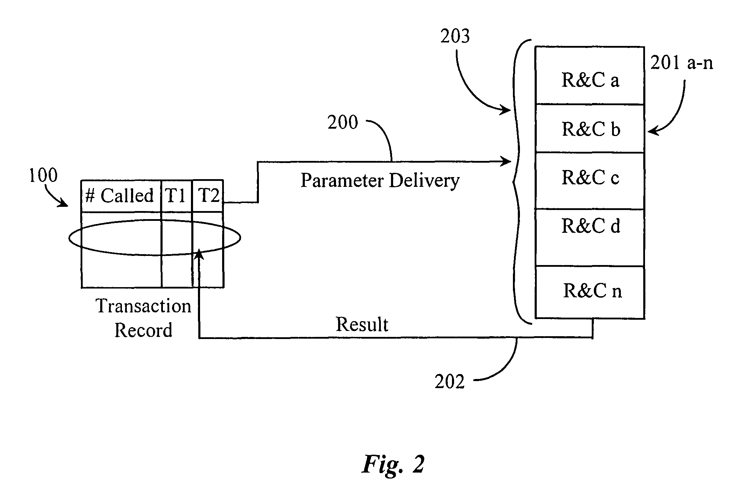

Fig. 2 is a block diagram illustrating the transaction record of Fig. 1 managed according to an embodiment of the invention. Transaction record 100 has all of the same parameters described with respect to Fig. 1 above. In this example, it is assumed that there exists a pricing model represented as an object and that illustrated blocks R&C 201a-n are a set of single rates and conditions parameters objectified as attributes having a one-to-one relationship to the pricing model. A single lookup represented herein as lookup 203 can be used to select the correct pricing model based on the delivered parameters (200). In this case the data result 202 is returned immediately after the transaction terminates without further processing.

While a cost result that takes into account the parameter of (T1-T2) cannot be returned to the record while the transaction is still active, a reasonable real-time result can be returned and displayed in record 100 during progression of the transaction if historical data is tied into real-time data. For example, after initial parameters are delivered at step 200 (except for T2) lookup 203 can request a parameter average time of transaction, which is included in each R&C block a-n as a constant. When the average fluctuates over time the new value, which may be assumed to be relatively constant for a stable period can be synchronized with the database and will change the pricing model appropriately.

In this way, an agent can use the real-time estimate value of cost per transaction to make a decision of whether to more quickly resolve a transaction, etc. By including average number of calls for the same period, the agent can see how is current transaction length may influence the bottom line figure for the total time of the shift even though the shift has just started.

It will be appreciated by one with skill in the art that rendering one-to-one relationships to a model over a great number of differing attributes may simply move the location of the bottleneck from the database to the object layer. Realistically. a preferred aspect of the invention seeks to reduce one-to-many associations to a particular model as much as is possible in order to avoid time consuming accesses to the database.

## Dynamics of Historical Data Integration to Real-Time Reportable Metrics

The methodology behind formation of the reporting layer within an interaction management framework of a communication center is different than in prior-art frameworks. The method of the invention covers generic principles of reporting on interaction management. The data modeling process focuses on the interaction management domain and is adjusted for historical data reporting specifics. Database optimization is based on the needs of historical reporting and classifies the content of real-time metrics.

The basis of the invention involves three-step processing of framework data including:

1. Generation of associations derived from framework data;
2. Synthesis of Entity-to-Entity (ERE) relationships; and
3. Propagation of the relationship history to a reporting database and to a real-time metric engine.

In addition, the method treats some aspects of reporting content customization ability and extension towards analytic processes, both real-time and historical.

Data reporting is, of course, the most critical component of all industrial software systems. Data reporting can be engineered into a system as a separate sub-system of the whole or as an embedded functionality of the framework of the system. In embedded function, the usual content is metrics about product functionality, such as perhaps network traffic for networking products, amount of requests processed for server products, and so on.

There exists in prior-art a trade-off between reporting capabilities embedded in the product core and reporting functions insulated in the reporting layer. The feasibility of the product core having a full menu of reporting functions is somewhat doubtful at least for two reasons. One is that in order to provide robust third-party control over the system, the software system has to rely on an abstract internal model. In a communication center for example, a contact center agent could be objectified as a serial device with stack of active tasks/routines to perform. The accuracy of internal model will ultimately define overall product success. There are basically two fundamental principles used for complex system design. These are well-known principals of object autonomy and minimal sufficiency. These principles typically define internal protocol. The concept of embedded reporting within the framework contradicts these standard principles. In other words, to be able to report data any object needs to know about other objects and has to be able to report their existence in protocol.

Therefore, basic reporting functions have to be embedded in the product core. To satisfy the question of which reporting functions will come from the core in multiple contexts like real-time metrics verses historical reporting, and resolving the meaning of these metrics including details and granularity, aggregation, in a preferred embodiment, is spread across multiple framework layers including the reporting database. This adheres to the fact that the reporting layer must report metrics.

There are two well-known approaches for metric calculation. One is real-time aggregation and reporting of data on the fly and the other is the processing of data stored in a reporting database. Traditionally, aggregation of collected data is the way reporting is done for obvious reasons. It enables drill-down (database navigation) capabilities and presents an opportunity to define new metrics during or after reporting. The prior-art limitations with historical aggregation and reporting are evident. For example, in a communication -center environment aggregation has to cover all functional aspects of an interaction management including application specifics, such as "Inbound call with attached data key 'Internal' should be considered as Internal" or "Agent has to be considered as ready for e-mail handling regardless any activity on the voice channel". Likewise, every single action of the interaction management (including configuration changes) needs to be recorded and cross-referenced to its precursors in the database.

The first point mentioned in the above paragraph is specific to both real-time and historical data calculation. The second point mentioned is specific only to historical calculation. The problem can be explained by marked differences in separate schemas used for real-time and historical reporting. Historical calculation is based on collected data whereas real-time calculation is performed on the fly. For example, in a communication center environment, an event such as Agent Not Ready will cause updating to values for several metrics such as Total/Current Number/Time in Not-Ready/Ready for associated Agent/Agent Group(s), etc. One limitation with real-time metric calculation is that in prior-art systems there are no supporting details, which makes "drill-down" in the database impossible.

Therefore, as described further above, a preferred implementation of the invention is to integrate aggregation and data calculation between both real-time metrics as they present themselves and collected historical data. A very basic communication-center related metric, for example, is Number of Interactions Handled (by an agent or system) during the time interval [t1, t2].

If the reporting database schema presents an interaction segment as an association between a particular agent and an interaction, metric calculation would be quite simple. The entire calculation could be presented as a single structured query language (SQL) statement. Building more detail into the interaction-segment record verses leaning toward real-time reporting is subjective and many variables need to be understood and considered. Granularity is preferably limited in building an interaction segment record. Likewise, granularity of metrics should be mirrored to the agent group of the handling agent. Associations derived in real time will define interaction detail structures. Therefore, in a preferred embodiment an interaction object is defined as an entry point to the data modeling process. The data model is the center of the conceptual view of the process. The data model is enriched by relationships that are aggregated in real time.

In a preferred embodiment of the invention users of the system are able to customize or tune-up metric definitions without having a clear understanding of an underlying model. In actual practice aggregated reports will come from an interaction management activity database. The following principles are achieved through integrated historical and real-time metric data aggregation, calculation, and reporting:

- Reporting database is adapted to reflect history of activity caused by interaction management
- Interaction management activity is presented in generic terms free of implementation aspects
- Generic terms are defined on entities that are common for entire subject area independent of specific application contexts (priori).
- Generic terms describe subject area without introducing any abstract entities, such as set. predicate, transaction, etc.
- Interaction management activity includes interaction activity and all surrounding activity related to resource management.
- Reporting database schema is adapted with a simple method for metric calculation
- Granularity of details is sufficient to provide unambiguous metric results.
- Drill-down to details is possible for any calculated metric, the technique exposing an interpretable set of results.

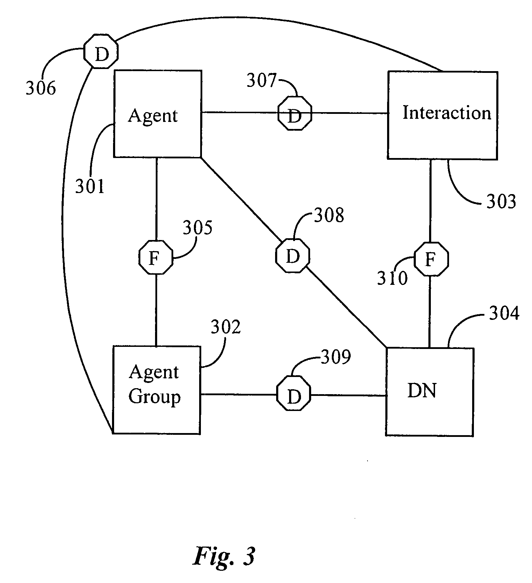

Fig. 3 is a block diagram illustrating direct and derived entity-to-entity relationship structure. Entities of this structure are Agent 301, Agent Group 302, Destination Number (DN) 304 and Interaction 303. All of the entities have associations to each other. One-to-one associations are labeled F because they are directly handled in framework. Derived association are labeled D for derived. A derived association is one that is derived from a plurality of association options. In this structure, the only direct one-to-one associations are (agent to agent group, agent group to agent) 305 and (interaction to DN, DN to interaction) 310.

Derived associations in this structure are D 307 (agent to interaction, interaction to agent), D 308 (agent to DN, DN to agent), and D 309 (agent group to DN, DN to agent group). It is assumed with reference to this illustration that any agent-to-destination number (DN) association is derived from agent login event and is configured against a list of agent-log-in DNs.

Agent-Interaction association 307 is derived from DN-Interaction 310 and Agent-DN. Agent group-interaction is a superposition of agent group-agent and agent-interaction. Population of this structure with specific derived associations is a case of real-time aggregation.

For purpose of discussion a relationship can be presented as a ratio F/D where F= the number of direct associations between 2 entities and where D=the number of derived associations. In a perfect world the value of D=0 lending full attractiveness to reporting in the framework. However this concept is unrealistic. The relationship F/D between to entities is the part of the concept of data modeling that presents the static association between two entities. Therefore F/D is the partial case of an association. More simply, a relationship is a completely defined association without ambiguity and context dependency. If we quantify any association in terms of relationships, then multiple relationships are likely to exist. For example, the association agent-interaction may encapsulate the following non-comprehensive list of relationships: Agent *handles* Interaction, Agent *transfers* to Agent, Agent *makes* consult call, and so on. In a preferred embodiment, when a particular relationship becomes a subject for reporting, it is subjected to correspondence to the aggregation procedure. The aggregation procedure analyzes association(s) between entities and provides the correct relationship between the entities as result. After a relationship has been completely defined in real time, the real-time and historical reporting duties may branch off. The synthesized relationship however should be stored in the historical reporting database for historical needs and processed by a real-time metric calculation engine as required. Associations provided by the framework of the system of the invention as used in a communication center embodiment can use the well-known DN-Party-Call data model. The mentioned model is known to the inventor as a suitable model for presenting framework associations in the communication-center sense.

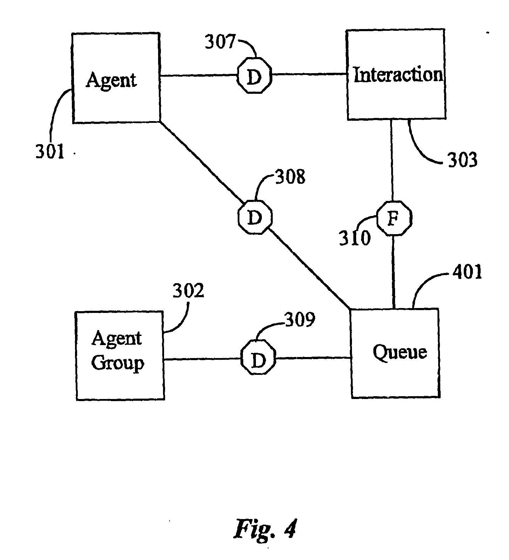

Fig. 4 is a block diagram illustrating a sub-schema of direct to derived relationships according to a preferred embodiment of the invention. A next major step in the proposed aggregation method of the invention is extraction of sub-schema to be put in a historical reporting database. Optimization is required here in terms of the contexts of reporting. For example, should entity A be reported on in terms of entity B or should entity B be reported on in terms of entity A?

Fig. 4 represents one of a plurality of possible sub-schemas. This particular example contains entities agent 301, agent group 302, interaction 303 and introduces the entity queue 401. It is important to analyze each combination of Entity-Association-Entity in extracted sub-schemas such as the one illustrated herein. Results of analyzing many sub-schemas produce an entities-to-entity relationship list. For each entity the mandatory attributes are identification (ID) and presentation name. For relationship mandatory attributes are ID, bi-directional names and cardinalities, creation time stamp, and deletion time stamp.

However, propagation rules from one entity to another are more complex then direct mapping. For example, there is a recursive relationship Transfer to applicable to both Agent and DN. The fact that interaction has been transferred form one DN to another does not obviously mean that interaction has been transferred from one agent to another. It can be transferred to the same agent or into the queue. Therefore, relationship propagation involves aggregation. The association nature is summarized as following:

(1) It is established between two entities;
(2) It could be primary or derived; and
(3) It is the input for relationship synthesis.

The purpose of associations is to introduce the time category in the data modeling and 'normalize' relationships. Association structure could be proposed as the following:
Initial Instant Action - **Activity** - Final Instant Action where Instant Action is an atom in the interaction management framework, the elementary effort, which can't be suspended or canceled. Activity is an aggregate on associations. In other words, association structure is recursive and Activity represents the association chain. Activity is the association chain between Initial and Final, which can be represented as an action pair (Initial, Final).
The basic activity structure defined above is a linked list where a final action of one association becomes an initial action for a next association. It is noted herein that multiple associations may follow one association.

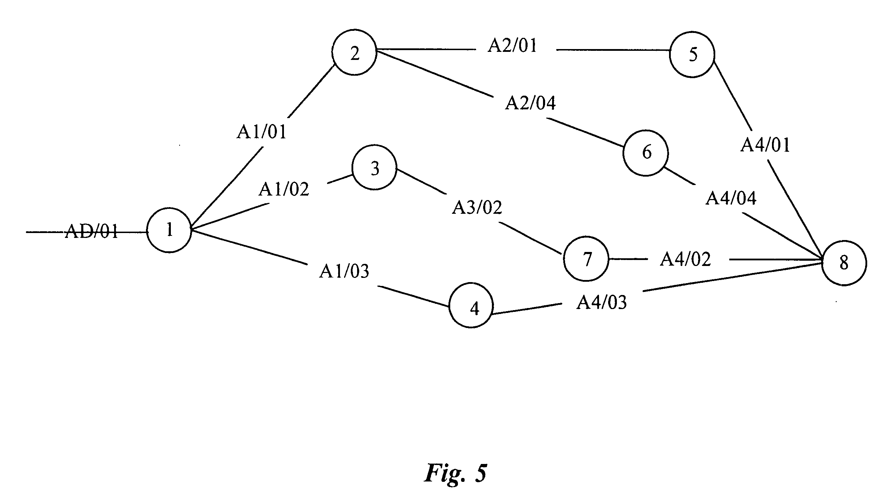

Fig. 5 is a block diagram illustrating a single association followed by dynamically generated associations. In this example, there are illustrated nodes 1-8. Nodes 1-8 represent entry points into association chains. Instant actions are illustrated as branches between the illustrated nodes 1-8. For example the association including all 8 nodes has an initial instant action labeled A0. The association has a final instant action of A4. There are illustrated three activity threads in this example, one per each entity instance. Sub-association (2, 8) has two activity threads, which means that one more object has been involved in the illustrated activity. It is clear that all activities are not going to retain concern for real-time metrics.

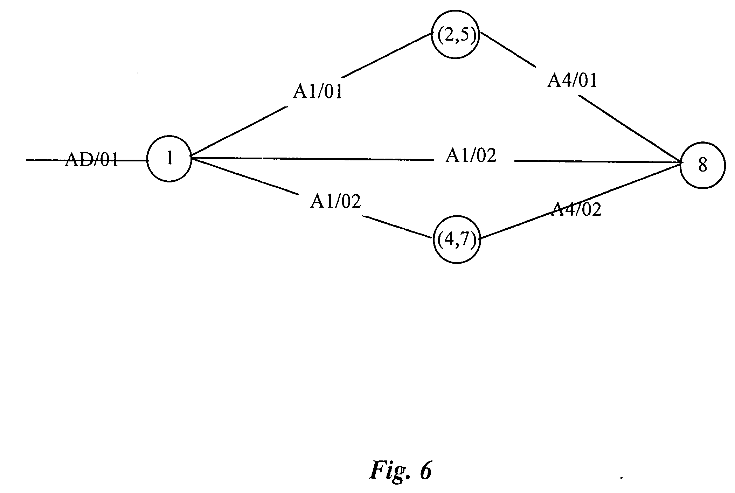

Fig. 6 is a block diagram illustrating a less complex association relationship than illustrated in Fig. 5. It is noted that in this example, the process is not concerned with 04 related details. Therefore there are no 04 associations represented in this example. As a matter of preference, the association chain of (1,8) may be constrained to focus only on activity 01.

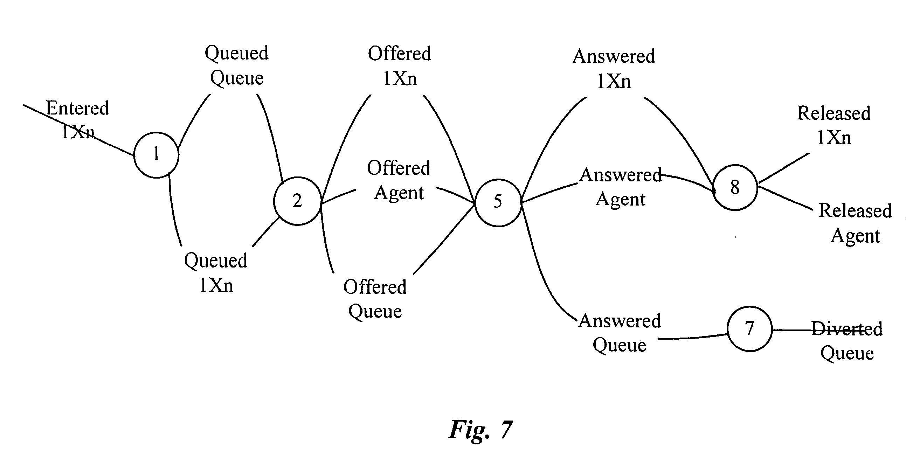

Fig. 7 is a block diagram illustrating interaction flow of a managed interaction according to an embodiment of the present invention. This illustrated structure presents an association having a limited number of entities and associations. Nodes 1, 2, 5, 7, and 8 are represented. It is noted herein that each branch between nodes has an Action and an Object. It is logical that an initial action would be associated with an initial entry point as shown below.

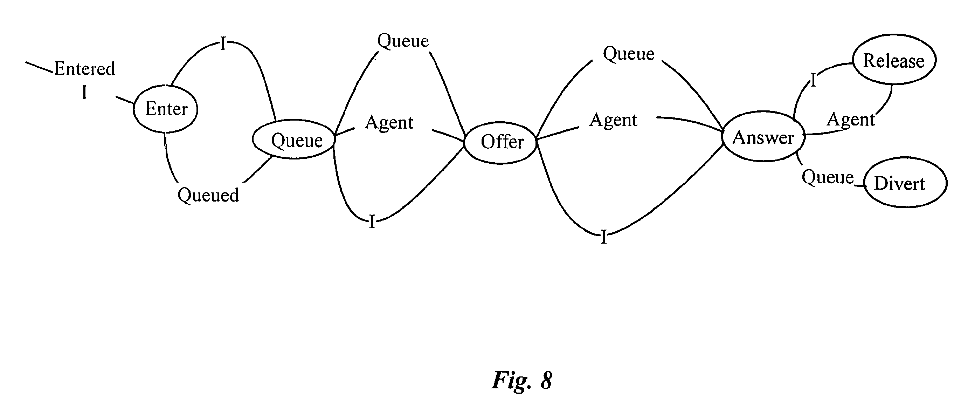

Fig 8 is a block diagram illustrating the interaction flow of Fig. 7 with assigned entities. Instant action implies that the interaction management framework performs the action. However, because applications are in charge of the interaction framework, execution of some instant actions may be delegated to objects in the association chain as is illustrated herein. As a matter of preference, any third party control system can be measured by a ratio between the number or quantity of instant interactions whose executions are delegated to objects in the association chain vs. those actions that are performed directly. In this case the action Enter (initial action in chain) is the only action performed by core. Subsequent actions Queue and Offer are delegated to a Switch. The action Answer could be performed either by Switch or delegated to Agent. The action Divert would be delegated to the Queue. Confirmation that an interaction has been answered (Answer) will trigger Divert action for Queue.
Instant actions are specific to management framework, in contrast to relationships, which describe business domain. The actions set defines management capabilities of the framework, whereas the increased variety of relationships exposes the complexity of the business domain. The primary goal of association analysis is to build multiple relationships between entities.
A rule known to the inventor as a correspondence rule puts relationships in correspondence with an association chain. For example, Interaction is *Placed In* <**CC Object**>; <**CC Object**> *Handles* Interaction; interaction is *Transferred From* <**CC Object**> to <**CC Object**>; and Interaction is *Offered to* <**CC Object**>. In this example <CC Object> is a meta-symbol for queue and agent. To adapt to more specific communication center language, <**CC Object**> *Handles* Interaction would be replaced with Interaction *waits* in queue and Agent *Has an* Interaction. Interaction *Waits in* Queue is built from association (Queue, Divert) and Agent *Has an* Interaction is based on association (Offer, Release).
Each relationship (E-R-E) corresponds to one and only one association, which is (Initial, Final). Further, any leg of (Initial, Final) has at least two branches, one branch for each entity specified in the relationship. Consider then that the system is a singular object involved in any association, which is considered the same as a singular entity for any relationship. By practicing this technique, the correspondence rule works in favor of generalization. For example, System *Handles* Interaction will correspond either to the association (Enter, Release) or (Enter, Divert). The association having the maximum duration period is selected. It is noted herein that such generalizations will cover complex interaction scenarios like conferencing with queue. Therefore the heart of the method of the invention is real-time processing of the primary association in two steps. The first step is to build derived associations and the second step is to synthesize and recognize entity-to entity relationships.

**Reporting Data Structure and HLD Considerations**

In order to preserve metric consistency, real-time and historical components reporting components work with a unified data structure. The underlying data model for each component might be specific for each component because of various implementation aspects. That is to say that the reporting database can use a relational data model and a statistical engine interface may us Java collection objects. However, the requirement of equivalence is obeyed. In this way a reporting data structure can be specified in terms of an entity-relationship model assuming that equivalent structure will be preserved in interfaces to real-time engine and to the interaction details database.

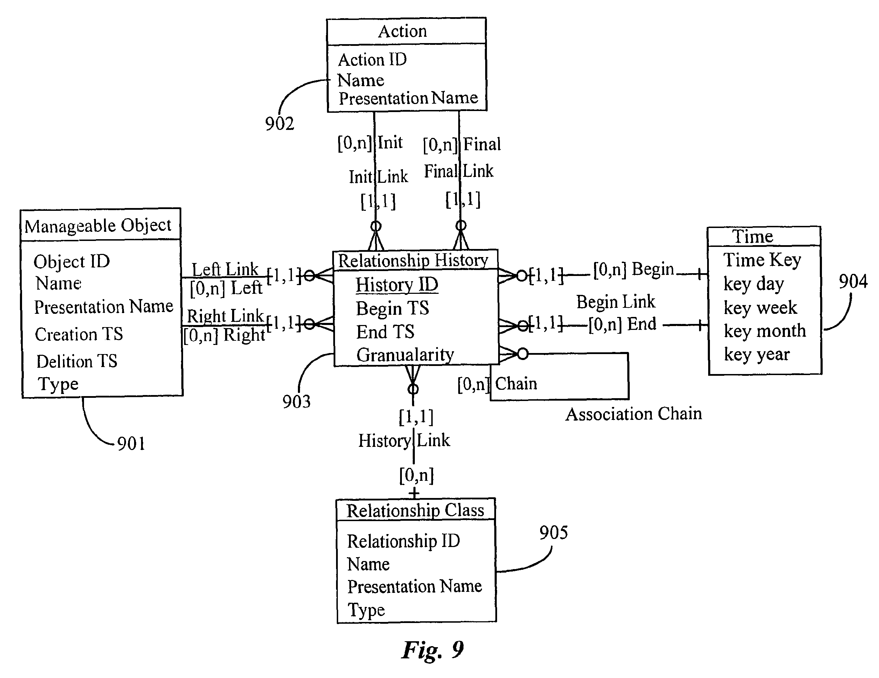

Fig. 9 is an entity to relationship diagram illustrating two different methods for interaction management according to an embodiment of the present invention. At the heart of the ERD represented herein is a fact table labeled Relationship History and given the element number 903. Within table 903 are data that are required for linking to other tables. Reading from top to bottom within table 903 are History identification (ID), Begin Transaction (TS), End Transaction (TS), and Granularity. History ID is simply the identification parameter of the particular table stored. Begin Transaction is a time stamp indication the beginning of a transaction that affects the table. End Transaction is a time stamp marking and end of a particular transaction that affects the table. Granularity is an entity that is an access point for further granularity in description of desired elements of the table. Associated dimensions of history table 903 are a Management Object table 901, A time table 904, and a Relationship Class table 905.

Relationship Class table 905 can link a particular agent, for example, with a particular interaction, or perhaps a particular interaction with a particular agent group. Class table 905, as a result, contains a variety of record groups. The exact amount will depend on the number of entity relationships encapsulated in a particular relationship class. Within table 905 there is represented a Relationship identification (ID), which is an identification parameter identifying a single synthesized relationship. A Name for the relationship, a Presentation Name for the relationship, and a Type (data type) for the relationship.

Manageable Object table has an Object identification (ID) parameter, a generic Name of the object, a Presentation Name of the object, a time stamp (TS) for creation of the object, a time stamp )TS) for deleting the object, and a Type (data type) of the object. Time table 904 contains a Time Key (database access key), key day, key week, key month, and key year.

At database initiation, all records should be empty accept for the relationship class table 905. Table 905 includes records that indicate whether or not they are primary relationships or derived relationships. Further, the set of relationships identified and contained in the record are identified as to which relationships the reporting layer of the system will track per action.

The contents of Manageable Object table 901 are provided by the framework core in real time. The reporting layer itself maps internal framework objects (manageable objects) onto the reporting entity set, or it could rely on a specific framework service to achieve mapping. For example, a relation ship record with the name *Handle* would be populated during database initialization. An associated entity record say, *Agent1,* would be a result of mapping particular access points during the process. Agent1 would be a manageable object and the reporting layer guards the creation and deletion of the entity and formats the presentation name of the entity. If Agent *handles* Interaction is the primary relationship then the reporting layer in this case would be limited to populating corresponding records into Manageable Object table 901 and into Relationship History table 903. The reporting layer would also dispatch progress data to a real-time statistics engine. Essentially there are two preferred variations of the scheme presented herein. It is noted herein that the just-mentioned schemes are not absolutely required for reporting according to an embodiment of the present invention, however they serve dedicated needs in this particular example.

The first scheme involves extension of Manageable Object table 901 for customization capabilities. Customization ability associated with table 901 allows entity enrichment with either custom attributes or with new attributes calculated by custom procedures working within Relationship History table 903. Examples of possible customization include user data binding in the interaction entity or setting up a group of group hierarchy to reflect the structure of customer organization. There are many other possibilities for customization. In a preferred embodiment of the invention, the reporting layer has an extension interface to Relationship History table for the purpose of populating the table with custom records.

The second scheme involves introduction of an action table represented herein as Action table 902. Action table 902 has an Action identification parameter, a Name for the action and a Presentation Name for the action. It is noted herein that Relationship History table 903 also exhibits an Association Chain relationship. The addition of an Action table and an Association Chain in conjunction with the Granularity attribute of Relationship History table 903 provides a data structure that is conducive to analytical processing by algorithm. For example, root cause analysis is possible through the association chain and initial action. The granularity attribute further enables definition of the association chain analyzed for each action, which is a compliment to pattern recognition procedures.

The reporting layer in this example is responsible for tracking the primary associations, synthesizing derived associations. populating to the reporting database and mirroring those associations where required to the real-time statistical engine. Data population rules under this scheme are held flexible and the principle of minimum sufficiency in reporting is observed.

In one embodiment of the invention, the reporting layer is adapted with an intermediate data store. A typical implementation would be an Object Database Storage (ODS). In a preferred embodiment an ODS is denormalized in the sense that each relationship can be presented in a table in the database. ODS content is robust enough to enable propagation of all derived associations. In this case, an ODS data model is the proprietary communication pipe between system framework and the reporting layer. As described above, the reporting layer feeds the reporting database and the real-time metrics engine.

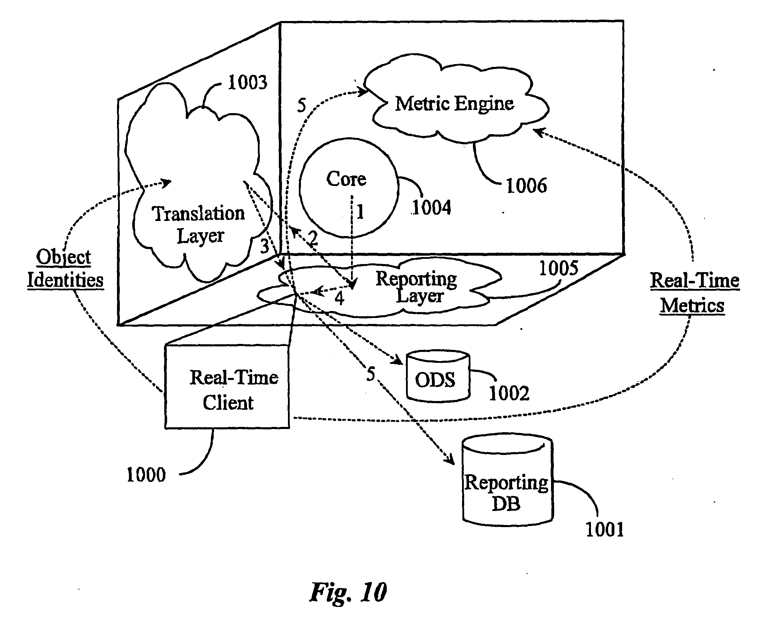

Fig. 10 is a block diagram illustrating the architecture of an interaction management and reporting system according to an embodiment of the invention. In a preferred embodiment of the invention, the system minimally includes a framework core 1004, a reporting layer 1005, a business/translation layer 1003, a real-time metric calculation engine 1006, and a reporting database 1001.

Core 1004 is the starting point for all incoming transactions. Any activity in the system begins in core 1004. Any activity within core 1004 is reported (1) to reporting layer 1005. Reporting layer 1005 then submits (2) the information received from core 1004 to business/translation layer 1003 for rule application and translation. Layer 1003 responds (3) to reporting layer with the appropriate translation and instruction.

In this example, the framework includes an ODS described further above as an intermediate storage and calculation resource. The data returned from layer 1003 is immediately stored (3) into ODS 1002 in persistent fashion. Derived associations are then produced through calculation using ODS 1002. The framework provides the primary associations. Final results are written (5) into reporting database 1001 and mirrored (5) to metric engine 1006. A real-time client 1000, which is actually part of the reporting layer provides any newly calculated real-time metrics to metrics engine 1006 per transaction and any newly calculated object identities to transition layer 1003.

ODS 1002 is a proprietary storage facility for framework data. The framework provides the primary object associations and relationships are synthesized by adding the derived associations to the models. The system operates on a unified data structure observing the principle of equivalence.

It is noted herein that real-time metrics engine 1006 reports on current activity and progress of each transaction associated with resolving an interaction, providing instant snapshots reflecting most recent activity. However, real-time reporting is constrained from making any predictions during progress of metrics calculation thereby avoiding corruption of reporting consistency.

Parameter differences between real-time metrics calculation and reporting and historical data reporting are resolved by the following metric definition. *Any metric in the system is a quantitative characteristic of its relationship history and evolution (progress)*. The following discussion provides a high-level mathematical basis for operational integrity.

Let $\Re = \{r\}$ , the set of relationships and $\mathbf{H_r} = \{(e_L, e_R, a_I, a_F, t_B, t_E)\}$ the history of the relationship **r,** the element of $\Re$ . Each element of $\mathbf{H_r}$ is presented by left entity, right entity, initial and final actions, relationship begin and end timestamps.

Let **M** be the set of all possible metrics of a given detail structure. Then $\mathbf{M_R}$, which is the reporting subset of **M** is the union of basic metric $\mathbf{M_B}$, or **factor-metrics $\mathbf{M_F}$** and **arithmetical expressions $M_E$**. Let $\mathbf{P_B}$, $\mathbf{P_E}$ and $\mathbf{P_F}$ be sets of calculation procedures for $M_B$, $M_E$ and $M_F$ respectively. Then the union of $P_B$, $P_E$ and $P_F$ will provide calculation for *all* of the reporting metrics.

The corollary here is that $\mathbf{M - M_R}$ is the set of pure analytical metrics. A basic metric is a metric of a particular relationship **r.** Therefore the metric procedure $\mathbf{p_B}$ has a definition based on $\mathbf{H_r}$ and consists of two steps, extraction and aggregation, $\mathbf{p_B = A_B (E_B (H_r))}$.

The result of $\mathbf{E_B (H_r)}$**,** the extraction procedure is subset of $\mathbf{H_r}$, and each element of subset satisfies to the selection criteria $\mathbf{C_B}$. The selection criteria $\mathbf{C_B}$ is the combination of criterions defined on the data elements of the relationship history, the elementary criterions. $\mathbf{C_B = L (Ce_L, Ce_R, Ca_I, Ca_F, Ct_B, t_E)}$**, L** is the logical expression, typically logical **AND.** Since any elementary criterion is optional, the trivial extraction procedure will extract all elements of $\mathbf{H_r}$, the history of the relationship **r.**

Elementary criterions for operational reporting are specified as $\mathbf{Ce_L}$ and $\mathbf{Ce_R}$. Consideration of which would be a right entity and which would be a left entity in a relationship is, in actual practice, a matter of design. However, for matter of discussion all left entities of a relationship shall be considered resources and all right entities shall be considered one of an interaction or a system. With that consideration $\mathbf{Ce_L}$ criterion becomes quite simple:

Object.ID = 'Agent1',

which is the explicit reference to a communication-center object defined as a resource. Depending on the nature of the relationship, **Ce$_L$** criterion may be defined either on a singular-entity **system** or on attributes of an **Interaction** entity. There are two cases:

a. **e$_R$ == system**

The **system-criterion** is somewhat trivial, and an associated extraction procedure won't satisfy it. For example, the relationship itself becomes the criteria in this case. To further illustrate, defined communication-center relationships Ready, Not Ready, and ACW link the *agent* entity with the **system**.

b. **L(Interaction.Attribute)**, meaning the logical expression of the Interaction attributes:

(a) **Interaction.Type == Inbound, Outbound, Internal,...**
(b) **Interaction.Media == Voice, e-mail, ...**
(c) **Interaction.CustomAttribute**

(1) **Interaction. Customer Segment == Platinum, Gold,**
(2) **Regular...Interaction. Product Segment == Banking, Sale, etc.**

The **Interaction-criterion** is defined on Interaction attributes, and the extraction procedure selects interactions with attribute values that are specified in the criterion. For example, relationships Handle, On-line, and Hold link an *agent* entity to an interaction.

2. **Ca$_I$** and **Ca$_F$**

**Ca == Action**

Since any relationship is provoked by an initial action and resolves to a final action, there is a need for action specific criterions in the extraction procedure for basic metric calculations in operational reporting. For example, the action *Transfer* specified as an initial criterion of the relationship Handle will cause the extraction of all details related to the fact that *Interaction* has been transferred to handle. If the same action *Transfer* is specified as a final criterion, it will cause the extraction of all details related to the fact that *Interaction* has been handled and has transferred out. A resource is defined by **Ce$_L$** criterion.

3. **Ct$_B$,t$_E$**

These criterions differ for real-time and historical reporting.

### *Activity Snapshot on Time t:*

Activity Snapshot represents a relationship history snapshot current for any specified moment of time (instant history). The presence of criterion **t$_B$** renders an instant history snapshot different from that of a flat snapshot and provides a key to being able to work with communication-center metrics like *Oldest Call Duration* or *Current Talk Time*. For example, for *Current Snapshot*, **t** = now and **Ct$_B$,t$_E$: t$_E$ = null.** For a snapshot of a given time t in the past, **Ct$_B$,t$_E$: (t > t$_B$) AND (t < t$_E$ OR t$_E$ = null).**

### Historical Interval

The concept of historical interval is based on the periodical nature of time, such as the century, year, month, week, day, etc. In operational reporting there is a basic historical interval. In fact, the selection criterion for basic historical interval is the number of the interval starting from some specific point in the past, say Jan 1, 1970 for example. An interval period is measured in whole interval numbers and 15 minutes is a typical historical interval for operational reporting. Thus, selection criterions **Ct$_B$,t$_E$** are defined as follows:

$$Ct_B,t_E: t \in N_I = (t - t_0) / I,$$

where **t** is calendar daytime and **I** is the interval length.

The history of relationship beginning

$$Ct_B, t_E: (N_I * I + t_0) < t_B < ((N_I + 1) * I + t_0)$$

Once a history interval becomes the criterion for $t_B$, it causes the extraction of the history of the beginning of the relationship. Consequently it will extract relationships, which are currently in progress where $t_E$ = null. Therefore, metrics that are related to time calculated on this data would not be pure historical metrics. The only way to avoid such ambiguity is to schedule extraction procedures properly like preventing extraction on current time interval.

The history of relationship end

$$Ct_B, t_E: (N_I * I + t_0) < t_E < ((N_I + 1) * I + t_0)$$

Once a history interval becomes the criterion for $t_E$, it also causes the extraction of the history of the *end* of the relationship. It ignores all developing relationships so that all metrics calculated on this data are *pure historical* metrics.

**The *projected* history of relationship end**

$$Ct_E: t_B < (N_I * I + t_0) \text{ AND } (t_E == \text{null OR } t_E > (N_I * I + t_0))$$

This criterion will extend pure historical details with details of current progress. In this case, the null-value of $t_E$ should be replaced with $t_E = I * Ct_B + t_0$ in the extracted result set. It can be seen that the appropriateness of both $t_B$ and $t_E$ for historical interval criterion is defined by the nature of the relationship and the aggregation functions. In a preferred embodiment, the system uses the history of the relationships beginning for further calculations and history of the relationships end to present basic metrics in reports.

**Evolution of relationship**

The evolution interval is, in a preferred embodiment, based on a continuum nature of the time, i.e. time frame is moving permanently. It could be shifted into the past or adjoined to the present. In both cases the speed of timeframe is synchronized with the frequency of the extraction procedure execution. Assume that **d** is the execution time for the extraction procedure. Timeframe speed cannot exceed **d**, because it progress to the future on the next step. Timeframe is propagated at a constant speed. Therefore **d** is the minimal measure unit of $t_B$ and $t_E$. For example, **d** = 5 seconds means that relationship history time has to be aligned to 5 seconds. This is a generic technique in data base design using a time key. **Ct** is defined by two parameters - timeframe width and shift into the past.
In a preferred embodiment, $t_B$ and $t_E$ are aligned to the extraction procedure execution time. For practical purposes it occurs once during data population. The exact configuration will depend in part on interface implementation where data consolidation and consistency aspects have to be addressed in system configuration.

**Aggregation Procedure**

The aggregation procedure $A_B$ is further adapted for extracting results and implements one of the following functions: $A_B$ = [Group by {Right |Left} [Max | Min]] [Distinct] {Count |Duration} ($E_B$ ($H_r$)) where **Count** is number of data elements in the extraction result set. **Duration** = $\Sigma$ ($t_E$ - $t_B$), and is the grand sum of elementary duration. For communication-center implementation, calculation rules used for operational metrics include *Total Number of Calls, Total Talk Time, Time to* Answer, and Time to Distribute among others. Basic aggregation functions for operational metrics are simplified as follows:

- $A_{Bn}$ = [Distinct] **Count** ($E_B$ ($H_r$))

- $A_{Bt}$ = **[Max |** Min] **Duration** ($E_B$ ($H_r$))

The factor-metric is the metric of the particular relationship **r**. The metric procedure $p_F$ is defined on $H_r$ and consists of three steps, the basic extraction, **factor-extraction** and basic aggregation, $p_B=A_B$ ($E_F$ ($E_B$ ($H_r$))) The extraction procedure $E_F$ is works on results of $E_B$ and extraction criteria $C_F$ is expressed as follows:

$$C_F = Ca_F \rightarrow (t_E - t_B) \, \theta \, (t_1 - t_2)$$

where $\theta$ is the meta-symbol for <, >, =, and logical combinations, such as between, <=, etc; **($t_1$ - $t_2$)** is the time interval, such as 10 - 20 sec. $Ca_F$ criterion is the mandatory part of the $C_B$ criteria used in the basic extraction procedure. It is noted herein that factor-metrics are pure historical metrics in this case. Total Number of Calls Answered in 10 sec is an example of a factor-metric. The extraction procedure should work on the history of the relationship *Handle*, and basic criterions are $Ce_L$, = Queue.ID, $Ca_F$ = Answered. The *arithmetical expression metric* is the metric of the particular *entity pair* **E-R-E.** The metric procedure $p_E$ is defined on $M_{B+F}$, the union of $M_B$ and $M_F$, and calculates the value of the arithmetical expression **E.**

The definition above creates denumerable set of metrics. The only limitation it puts on metrics used in expression is the entity context of the relationship, for example, $m_i$ = (Total Number of Calls in *Queue) / (Agent* Total Talk Time) is not a valid expression because the entity pair is different for both metrics. Therefore, $m_i$ should be considered as part of **M-$M_R$.**

Let $M^r_{B+F}$ is the subset of $M_B$, which contains the basic and factor metrics calculated on the history of a particular exemplary relationship **r**. Then $M_{B+F}$ is the union **U $M^r_{B+F}$**, $\forall \mathbf{r} \in \Re$.

The limitation of building the expression using only $M^r_{B+F}$, which is the subset of basic metrics used to calculate the history of one relationship would narrow $M_E$ significantly. Note the common $C_B$ criteria for all $m^r_B$ participating in the given expression, guarantees the consistency of $m^r_E$. Even the simple $m^r_1$/$m^r_2$ ratio covers a major part of the operational metrics. For instance, Average Talk Time = (Total Talk Time)/(Total Number of Calls), the metric is calculated on the history of the E-R-E relationship *Agent -- On-line -- Interaction*.

Let $M^r_E$ is the set of metrics built as an arithmetical expression on subset of $M^r_{B+F}$. $M^r_E$ : {$m^r_E$ = **E**({$m^r_{B+F}$})} and $M_E$ : {$m_E$ = **E**({$m^r_E$})}. Likewise, the basic ration is defined as $m^r_R$ = $m^r_{Duration}$ / $m^r_{Count.}$, and the basic *availability ratio* is defined as basic ratio calculated on relationships with the **system** - $m_{Ra}$ = $m^{system}_R$, the basic *performance ratio* as calculated on relationships with **Interactions -** $m_{RP}$=$m^{Ixn}_R$.

Average Login Time is the example of $m_{Ra}$ and Average Handle Time is the example of $m_{Rp}$. There are some intervals where basic ratio exceeds the interval width. For instance, the Average Login Time for agent on 15 minutes time interval could be several hours, depending on time of the recent login. Despite the forgoing, Average Login Time is a misleading name. There is a specific need, however, for this ratio in operational reporting. This is most suitable way to proximate interval aggregation with metric aggregation. An *Agent Talk Time Percentage* metric could be calculated as

$$m^{Ixn}_{On\text{-}line}/m^{System}_{Login} * 100\%,$$

$m^{Ixn}_{On\text{-}line}$ is the performance ratio and $m^{System}_{Login}$ is the availability ratio. Average login time will work fine as long as the agent performs only one successful login. Similarly, Average Talk Time suffices if the agent is not handling simultaneous interactions, which is probably Ok for voice. but scarcely suitable for e-mail or web/chat interactions. Therefore the applicability for the formula $m^{Ixn}_{On\text{-}line}/m^{System}_{Login}$ is limited but suffices for specific media-dependant cases.

One with skill in the art will recognize that there are several ways to measure the performance of any particular resource. Therefore it is important in a preferred embodiment to have several competitive calculation schemas such as the one presented above preserved in reporting capability.

The metric pyramid described above, although fine for a media-specific application, is mentioned for discussion purpose only and is, in practice, too simple for performance measurement in the subject area where certain resources have multiple media-based activities running in parallel. More complex formulas may be applied to handle media-in-parallel cases, such mechanisms able of course to distinguish between and arbitrate the differing media interactions in parallel.

The definition of the reporting content meets the following goals:

- Real-time and Historical equivalence
- Comprehensive indication of performance
- Measure unit consistency
- Common calculation schema/algorithm

The basic idea of the methodology is to build reporting on the top of the history of relationships. In a preferred embodiment media is the basis for interaction, the medium. The whole system method is build around entity-to-entity relationship syntheses.

One with skill in the art will understand that media considerations define the boundary for proposed methodology and make it possible by way of entity, relationship and attribute projections. One with skill in the art will also understand that there are multiple ways to configure media parameters to fine tune the methodology. One example is media binding as an attribute of Interaction entity. Another is presenting media as separate entities. Yet another is extending relationships with media hierarchy such as root node *Handle* has child nodes *phone*, *e-mail*, etc. There are many possibilities including combinations of the above examples.

The system and method of the present invention can be utilized and configured for multiple communication-center scenarios and modes from CTI-enabled COST interaction (simple case) to more complex dual-capable communication-center capabilities. Data aggregation, calculation, and reporting capabilities are distributed both in the framework and in the reporting database giving an optimum efficiency in terms of interaction tracking and interaction development reporting. Real-time metrics reporting capability provides resources with the latest information enabling best service scenarios for initiating clients. Therefore the method and apparatus of the invention should be given the broadest possible scope under examination. The spirit and scope of the invention is limited only by the claims that follow.

**Claims**

1. A data aggregation and reporting system for integrating aspects of real-time metrics content and historical database reporting comprising:

   a system framework including at least a framework core, a reporting layer, a business translation layer, and a metrics engine;
   a real-time client application for synchronizing propagation of the real-time metrics; and
   a reporting database for storing historical data and serving data upon request;

   **characterized in that** the system integrates historical data return with deliverable real-time metrics through synthesizing relationships in an object oriented fashion between entities involved in an interaction chain of transactions.

2. The system of claim 1 wherein data of both a real time nature and of a historical nature is collected and aggregated during relationship synthesis.

3. The system of claim 1 wherein entity-to-entity data modeling is used to synthesize relationships.

4. The system of claim 1 wherein relationships include primary associations and derived associations, the derived associations held to a minimum through a minimum sufficiency in reporting principle.

5. The system of claim 1 wherein real-time metrics are calculated from one or more derived associations.

6. The system of claim 1 wherein real-time metrics change the direction of a transaction chain associated with an interaction handling.

7. The system of claim 1 wherein a DN-Party-Call data model is utilized as a generic data model.

8. The system of claim 1 wherein manageable objects are synthesized in real time by the real-time metrics engine through building of derived associations.

9. The system of claim 1 wherein the framework further includes an intermediate storage system functioning as a pipeline between the framework and the reporting database.

**10.** The system of claim 1 wherein real-time metrics are used to synthesize and update manageable objects used as system entities.

**11.** The system of claim 4 wherein associations for one relationship are part of an evolving association chain.

**12.** The system of claim 1 wherein entities delegate further activity to one or more other entities in an association chain.

**13.** The system of claim 1 wherein the system is used for managing interactions in a communication-center.

**14.** In a data aggregation and reporting system, a method for building object-interaction relationships between entities managed as objects within the system comprising steps of:

(a) initiating a relationship beginning;
(b) obtaining primary associations of the relationship;
(c) collecting real-time and historical data about the relationship as it progresses;
(d) building derived associations in real time; and
(e) using the associations to provide a complete relationship model.

**15.** The method of claim 14 wherein the system provides interaction management in a communication center.

**16.** The method of claim 14 wherein in step (a) initiation of a relationship beginning is event driven.

**17.** The method of claim 14 wherein in step (a) a time stamp is applied at relationship initialization.

**18.** The method of claim 14 wherein in step (b) the primary associations are pre-defined by the framework of the system.

**19.** The method of claim 14 wherein in step (c) data collection is extended from a reporting database of the system to the framework of the system.

**20.** The method of claim 14 wherein in step (c) real-time metrics are calculated from the real-time data.

**21.** The method of claim 14 wherein in step (d) the derived associations are included with the primary associations in a link-state association chain.

**22.** The method of claim 14 wherein in step (e) the relationship completely defines the state of the interaction and parties to the interaction.

**23.** The method of claim 14 wherein in step (e) entity-to-entity data modeling is used to synthesize relationships.

*Fig. 1 (Prior Art)*

| # Called | T1 | T2 |
|----------|----|----|

100

Transaction
Record

Parameter Delivery

200

Result

202

203

| R&C a |
|-------|
| R&C b |
| R&C c |
| R&C d |
| R&C n |

201 a-n

*Fig. 2*

*Fig. 3*

Fig. 4

*Fig. 5*

EP 1 401 181 A1

Fig. 6

Queued
Queue

Offered
1Xn

Answered
1Xn

Entered
1Xn

Released
1Xn

(1)

Offered
Agent

Answered
Agent

(8)

(2)

(5)

Released
Agent

Queued
1Xn

Offered
Queue

Answered
Queue

(7)

Diverted
Queue

*Fig. 7*

*Fig. 8*

**Fig. 9**

EP 1 401 181 A1

**Fig. 10**

EP 1 401 181 A1

**European Patent Office**

## EUROPEAN SEARCH REPORT

Application Number

EP 03 02 1127

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 162 814 A (AVAYA TECHNOLOGY CORP) 12 December 2001 (2001-12-12) * paragraphs [0004]-[0006] * --- | 1,14 | H04M3/51 G06F17/60 |
| A | US 2001/044676 A1 (POWERS JAMES KARL ET AL) 22 November 2001 (2001-11-22) --- | | |
| A | US 2001/027389 A1 (WARE BRYAN ET AL) 4 October 2001 (2001-10-04) --- | | |
| A | WO 02 19229 A (WITAN GROUP) 7 March 2002 (2002-03-07) --- | | |
| A | WO 01 04722 A (CONNOR PAUL MICHAEL O ;DATAMINE LTD (NZ)) 18 January 2001 (2001-01-18) ----- | | |
| | | | **TECHNICAL FIELDS SEARCHED (Int.Cl.7)** H04M G06F |

The present search report has been drawn up for all claims

| Place of search | Date of completion of the search | Examiner |
|---|---|---|
| THE HAGUE | 13 January 2004 | Vandevenne, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

EP 1 401 181 A1

## ANNEX TO THE EUROPEAN SEARCH REPORT
## ON EUROPEAN PATENT APPLICATION NO.

EP 03 02 1127

13-01-2004

| Patent document cited in search report | | Publication date | Patent family member(s) | | Publication date |
|---|---|---|---|---|---|
| EP 1162814 | A | 12-12-2001 | CA | 2332479 A1 | 07-12-2001 |
| | | | DE | 60003395 D1 | 24-07-2003 |
| | | | EP | 1162814 A2 | 12-12-2001 |
| | | | JP | 2002044261 A | 08-02-2002 |
| US 2001044676 | A1 | 22-11-2001 | AU | 756656 B2 | 16-01-2003 |
| | | | AU | 1233800 A | 22-05-2000 |
| | | | CA | 2348994 A1 | 11-05-2000 |
| | | | EP | 1133677 A2 | 19-09-2001 |
| | | | JP | 2002529836 T | 10-09-2002 |
| | | | US | 2002055853 A1 | 09-05-2002 |
| | | | US | 2002095462 A1 | 18-07-2002 |
| | | | WO | 0027063 A2 | 11-05-2000 |
| | | | US | 6167395 A | 26-12-2000 |
| | | | US | 6170011 B1 | 02-01-2001 |
| | | | US | 6381640 B1 | 30-04-2002 |
| | | | US | 2003179729 A1 | 25-09-2003 |
| | | | US | 2001011366 A1 | 02-08-2001 |
| | | | AU | 755234 B2 | 05-12-2002 |
| | | | AU | 5813699 A | 03-04-2000 |
| | | | CA | 2343286 A1 | 23-03-2000 |
| | | | CN | 1323421 T | 21-11-2001 |
| | | | EP | 1125214 A1 | 22-08-2001 |
| | | | JP | 2003502720 T | 21-01-2003 |
| | | | WO | 0016207 A1 | 23-03-2000 |
| | | | US | 2002091726 A1 | 11-07-2002 |
| | | | US | 2001025309 A1 | 27-09-2001 |
| US 2001027389 | A1 | 04-10-2001 | AU | 1941401 A | 12-06-2001 |
| | | | WO | 0140984 A1 | 07-06-2001 |
| | | | US | 2001027388 A1 | 04-10-2001 |
| WO 0219229 | A | 07-03-2002 | AU | 8701301 A | 13-03-2002 |
| | | | WO | 0219229 A2 | 07-03-2002 |
| WO 0104722 | A | 18-01-2001 | AU | 766555 B2 | 16-10-2003 |
| | | | AU | 5719800 A | 30-01-2001 |
| | | | WO | 0104722 A2 | 18-01-2001 |

EPO FORM P0459